Europäisches Patentamt

(19) European Patent Office

Office européen des brevets

(11) Publication number: **0 109 835**
**B1**

(12) **EUROPEAN PATENT SPECIFICATION**

(45) Date of publication of patent specification: **25.01.89**

(21) Application number: **83307035.2**

(22) Date of filing: **17.11.83**

(51) Int. Cl.⁴: **H 02 M 7/42,** H 02 P 7/62

(54) Wave generation circuit for an inverter.

(30) Priority: **17.11.82 JP 201529/82**

(43) Date of publication of application:
**30.05.84 Bulletin 84/22**

(45) Publication of the grant of the patent:
**25.01.89 Bulletin 89/04**

(84) Designated Contracting States:
**DE FR GB**

(56) References cited:
**EP-A-0 063 176**
**GB-A-2 083 959**
**US-A-4 356 544**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Katto, Masayuki**
**Obata Apartment No. 7-307 27, Aza Inari-mae**
**Obata Moriyama-ku Nagoya Aichi Pref. (JP)**
Inventor: **Sugishima, Eiichi**
**Obata Apartment No. 6-305 25, Aza Inari-mae**
**Obata Moriyama-ku Nagoya Aichi Pref. (JP)**

(74) Representative: **Lawson, David Glynne et al**
**MARKS & CLERK 57-60 Lincoln's Inn Fields**
**London WC2A 3LS (GB)**

Courier Press, Leamington Spa, England.

## Description

Background of the invention

This invention relates to a wave generation circuit for generating a plurality of waves of different phases to form driving signals for switching elements in an inverter, in particular in a pulse-width modulation inverter for driving an AC motor or the like. The wave generation circuit comprises memory means in which wave data are stored, and means for reading out the wave data from respective addresses in the memory means for each phase.

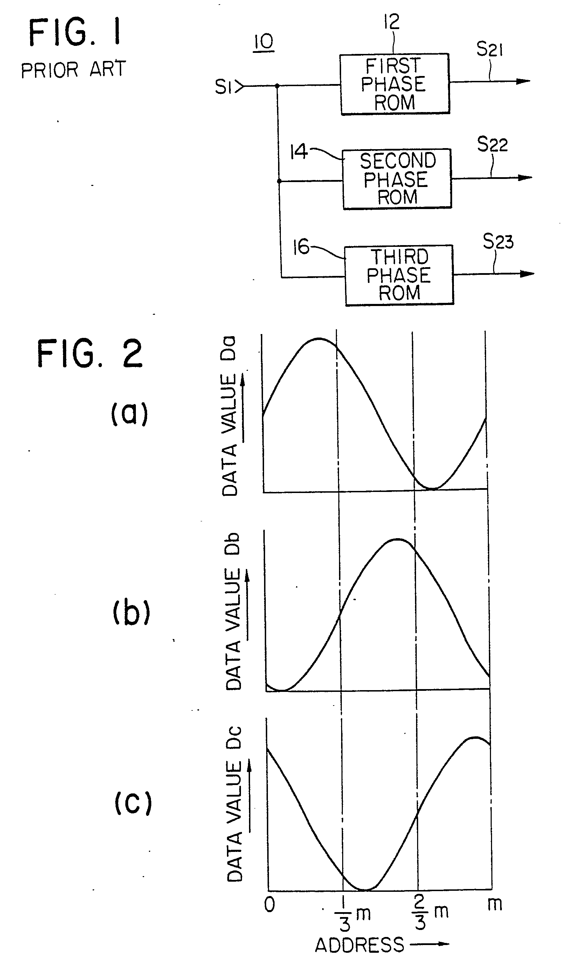

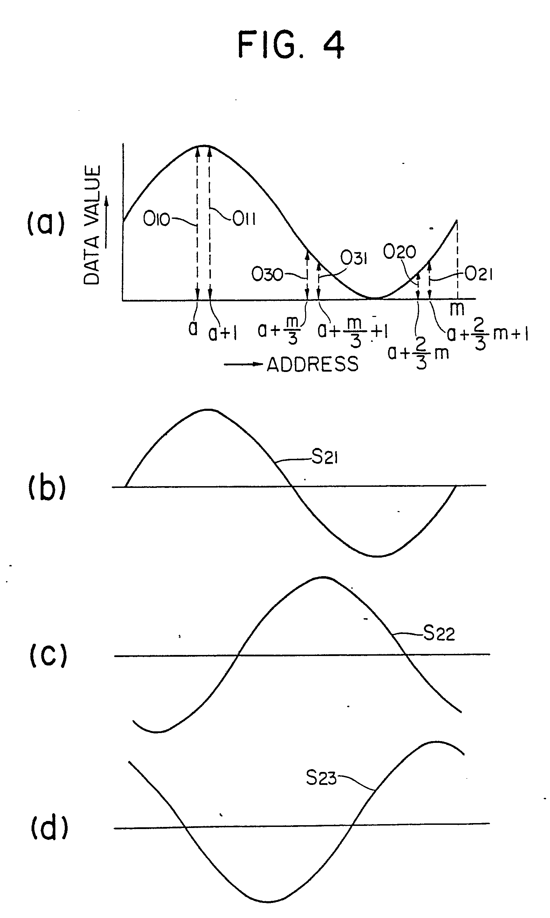

A conventional wave generation circuit for a pulse-width modulation inverter used to generate waves of three different phases is illustrated in Figure 1, generally designated by reference numeral 10. The generated waves form a plurality of reference sine waves. The reference sine waves are then compared with a saw tooth carrier wave to form pulse width modulated waves which serve as driving signals for the inverter, as is well known in the art. In the Figure, an address signal $S_1$ is provided for first, second, and third phase Read only Memories (hereinafter called ROM's) 12, 14 and 16 which respectively provide as outputs the waveform data $S_{21}$, $S_{22}$ and $S_{23}$ for the three different phased waves generated by the circuit 10. The ROM's 12, 14 and 16 have been respectively stored with waveform data Da, Db and Dc for the generated waves over memory addresses O-m. As can be seen from Figures 2(a), 2(b) and 2(c), the value of Da at a given address is equal to the value of Db at that address+m/3, where m is the total number of addresses in each ROM, and similarly, the value Db at a given address equals the value of Dc at that address+m/3. The address signal $S_1$ has a desired frequency corresponding to the output frequency of the inverter. In response to the address signal $S_1$, the ROM's 12, 14 and 16 provide as outputs the three-phase waveform data $S_{21}$, $S_{22}$ and $S_{23}$ separated by a phase difference of 120 degrees, as shown in Figures 4(b), 4(c) and 4(d).

The conventional circuit illustrated in Figure 1 has the disadvantage of high cost due to the necessity of expensive memory elements (for example, ROM's) corresponding in number to the number of phases used. Also, it is difficult to make modifications of the waveform data.

GB—A—2 083 959 and US—A—4 356 544 disclose wave generation circuits of the type with which the invention is concerned. In each of these specifications, a sine wave is divided into sections of 30° electrical angle, and the wave data of such 30° sections are stored in separate memory areas. Each of the 30° patterns can be used a plurality of times in the course of one period of the sine wave, the operation means providing the appropriate distribution of the wave data derived from the different memory areas to the corresponding phase outputs of the wave generation circuit.

The invention

The present invention provides a wave generation circuit as set forth in Claim 1, and a pulse-width modulation inverter in combination with the wave generation circuit, as set forth in Claim 7. The remaining Claims set forth preferred features of the invention.

The number of expensive memory elements used in the wave generation circuit is as low as possible, and a single ROM can be used as the memory means. The wave generation circuit generates a plurality of differently-phased waves which are then modulated to form driving signals for switching elements in the inverter. The operation means provides address signals for each phase to the memory means, the difference between the addresses indicated by the address signals corresponding to the phase difference between the generated waves, and transmits the phase address signals to the memory means to cause the memory means to provide the stored data as an output. The phase latch means receives phase latch command signals provided from the operation means in synchronization with the phase address signals to latch the corresponding stored data provided from the memory means and receives an output timing signal transmitted from the operation means when the corresponding stored data for each phase are all latched to cause the phase latch means to provide as an output the latched data. The operation means provides new address signals at predetermined intervals to cause the phase latch means to transmit the waveform data of the waves for each phase.

The length of the predetermined intervals is preferably the reciprocal of the product of the number of addresses of the memory means and a predetermined wave frequency. Assuming the number of phases to be n, the operation means provides address signals corresponding to each phase differing from each other by an integral multiple of m/n, which is the total number m of addresses of the memory means divided by n.

The drawings

Figure 1 shows a circuit diagram of a conventional wave generation circuit for a pulse width modulation inverter;

Figures 2(a), 2(b), and 2(c) show graphs of waveform data values stored in memory elements in the circuit of Fig. 1 plotted as a function of address;

Figure 3 shows a circuit diagram of one embodiment of the present invention;

Figure 4(a) shows address data which are stored in the memory element in Fig. 3, and Figures 4(b)—(d) show output waveforms of the wave generation circuit in Fig. 3; and,

Figure 5 shows a time chart of the various portions of the wave generation circuit in Fig. 3.

Throughout the Figures, identical reference numerals designate like or corresponding parts.

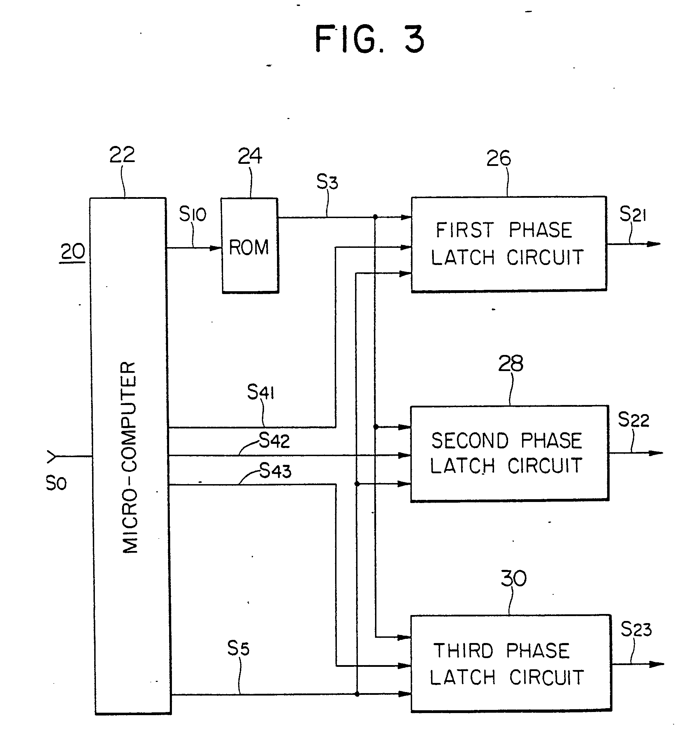

Fig. 3 shows one embodiment of a wave generation circuit for a pulse width modulation inverter according to the present invention. The wave generation circuit is generally designated by reference numeral 20 in which a microcomputer 22, a ROM 24, a first, second, and third phase latch circuits 26, 28, and 30, respectively, are included. The microcomputer 22 which acts as an operation means or circuit has an input portion for receiving a command signal. So indicating a wave frequency f, a first output portion connected to the ROM 24 (a memory element) and providing an address signal $S_{10}$, a second output portion providing latch command signals $S_{41}$, $S_{42}$, and $S_{43}$ to the latch circuits 26, 28, and 30, respectively, and a third output portion providing output timing signal $S_5$ to all of the latch circuits 26, 28, and 30. The ROM 24 has an output portion providing a waveform data signal $S_3$ to all of the latch circuits 26, 28 and 30. The three latch circuits 26, 28, and 30 respectively provide as outputs the waveform data $S_{21}$, $S_{22}$ and $S_{23}$, as is also the case in the circuit in Fig. 1. As a phase latch circuit, a commercially available circuit such as the Toshiba-TC40174BP (a monolithic digital IC) may be used.

In the operation of the embodiment shown in Fig. 3, the ROM 24, has been previously stored with reference waveform data (e.g. 8-bit data) over addresses O-m as shown in Fig. 4(a). In response to the reception of the address signal $S_{10}$, the ROM 24 is made to provide as an output the corresponding waveform data signal $S_3$. This address signal $S_{10}$ is transmitted by the microcomputer 22 at predetermined intervals in response to the command signal So. The length of the predetermined intervals is, for example, (the total number of addresses m×the generated wave frequency f)$^{-1}$.

The address signal $S_{10}$ comprises three different phase address signals. The addresses indicated by each of the phase address signals are shown below in Equation (1). It can be seen that the addresses indicated by any two of the phase address signals differ by an integral multiple of m/n, where n is the number of phases.

first phase address      a
second phase address    $a+\frac{2}{3}m$    (1)
third phase address      $a+\frac{1}{3}m$

When the above equations give a value greater than m, the correct address is found by substracting m from that value.

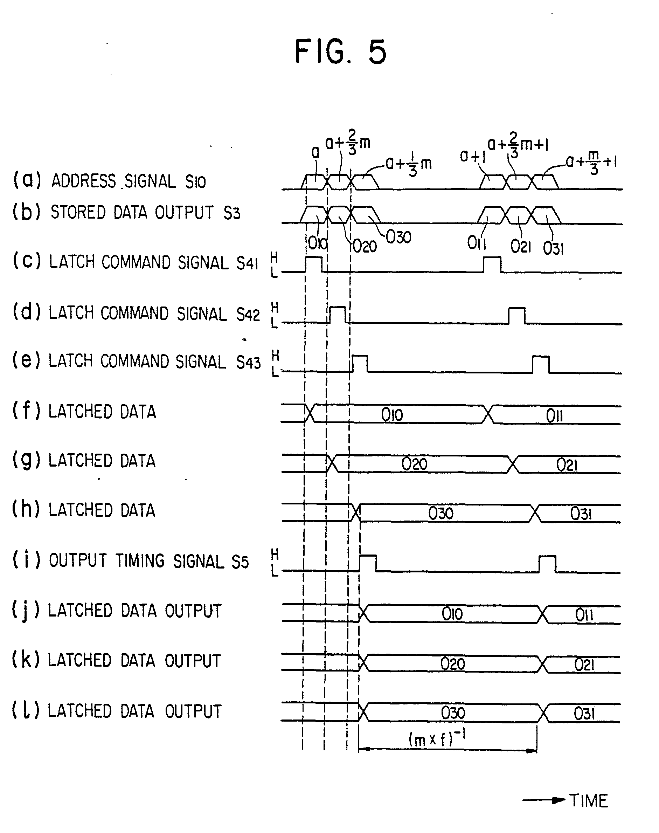

After receiving the address signal $S_{10}$, the ROM 24 then provides data signal $S_3$ which comprises the data ($O_{10}$, $O_{30}$, $O_{20}$) stored at each of the three addresses (a, a+m/3, a+2m/3) indicated by address signal $S_{10}$. This is shown in Fig. 5(b). Thus the operation means or microcomputer 22 sequentially provides address signals $S_{10}$ for each of said phases, and the memory means or ROM 24 sequentially provides as an output a waveform data signal $S_3$ stored at the addresses indicated by the address signals $S_{10}$. The outputs of the ROM 24 are provided at each of the phase latch means or circuits 26, 28 and 30.

Each of the phase latch circuits 26, 28 and 30 is used as a controller for latching the stored data $O_{10}$, $O_{20}$ or $O_{30}$ transmitted from the ROM 24 and for providing them simultaneously as outputs. Therefore, they are supplied with the latch command signals $S_{41}$, $S_{42}$ and $S_{43}$, respectively, as well as with the output timing signal $S_5$ from the microcomputer 22. Thus, the latch circuits 26, 28 and 30 respectively receive a first latch command signal $S_{41}$ (Fig. 5(c)), a second latch command signal $S_{42}$ (5(d)), and a third latch command signal $S_{43}$ (Fig. 5(e)) which are sent out of the microcomputer 22 in synchronization with each of the three signals forming phase address signal $S_{10}$. Thus the microcomputer 22 sequentially transmits each of the phase latch command signals $S_{41}$, $S_{42}$ and $S_{43}$ to a predetermined one of the latch circuits 26, 28 and 30. At the time of reception, the latch circuits 26, 28 and 30 respectively latch the stored data $O_{10}$, $O_{20}$ and $O_{30}$ provided as outputs from the ROM 24 as seen in Figs. 5(f)—(h).

All of the latch circuits 26, 28 and 30 simultaneously receive the output timing signal $S_5$ (Fig. 5(i)) transmitted from the microcomputer 22 after all of the stored data $O_{10}$, $O_{20}$ and $O_{30}$ have been latched but before the subsequent address signal $S_{10}$ has been transmitted from the microcomputer 22, and as a result provide phase latched data $O_{10}$, $O_{20}$, and $O_{30}$ as outputs as shown in Figs. 5(j)—(l).

The microcomputer 22 than adds 1 to each of the previous phase address values to calculate the new phase address values given by the following Equation (2) and forms the next address signal $S_{10}$ (see the right side of Fig. 5(a)) which is sent to the ROM 24 to repeat the above operations.

new first address      a+1
new second address    $a+\frac{2}{3}m+1$    (2)
new third address      $a+\frac{1}{3}m+1$

The repetition of the above procedures at the predetermined intervals of (the total number of addresses m×the modulated wave frequency f)$^{-1}$ will provide the wave form data for the waves shown in Figs. 4(b)—(d). When a value calculated according to Equation (2) is greater than m, the actual phase address is found by subtracting m from that value.

It is to be noted that while the illustrated embodiment uses a microcomputer as an operation circuit, the operation circuit may be formed by an integrated circuit element such as a C-MOS or TTL element with a similar effect. Also, while the illustrated embodiment employs a separate ROM as a memory element, other memory elements such as EP-ROM may be employed, or memory elements included in the microcomputer may be used. Furthermore, it will be apparent to one skilled in the art that although in the above embodiment the stored reference waveform data is for a regular sine wave, the stored reference waveform data may be for other types of waves, such as a triangular wave, and still fall within the scope of the present invention.

Since in the present invention a wave generation circuit for a pulse width modulation inverter apparatus is formed from a memory element stored with reference waveform data, an operation circuit for controlling the address of the memory element, and phase latch circuits controlled by the operation circuit for latching the output data from the memory element to obtain the waveform data for the generated waves by using a single memory element, it is advantageous in that a memory element is effectively utilized, resulting in a cheap apparatus while only a single memory element may be modified in contents in correspondence with the modification of the waveform, making modifications simpler.

**Claims**

1. A wave generation circuit for generating a plurality of waves of different phases, comprising memory means (24) in which wave data are stored, and means for reading out the wave data from respective addresses in the memory means (24) for each phase, characterised in that the wave data for only one phase are stored in the memory means (24), operation means (22) are provided for reading out, in each operating cycle of the circuit, wave data from respective addresses in the memory means (24) which differ according to the phase difference between the output waves, and phase latch means (26, 28, 30) are provided for each phase, and receive phase latch command signals from the operation means (22) to store the wave data read out from said respective addresses, the output of the phase latch means (26, 28, 30) constituting the respective phase-displaced output waves.

2. The wave generation circuit of Claim 1, wherein the operation means (22) provides a phase address signal ($S_{10}$) for each of said phases at predetermined intervals whose length is (the number of addresses of said memory means X a predetermined wave frequency)$^{-1}$.

3. The wave generation circuit of Claim 1 or 2, wherein the operation means (22) simultaneously transmits an output timing signal ($S_5$) to all of said phase latch means (26, 28, 30) when all of said phase latch means (26, 28, 30) have completed the latch operation, to cause said phase latch means (26, 28, 30) to provide the latched data as outputs.

4. The wave generation circuit of any of the preceding Claims, wherein said operation means (22) has an output portion connected to said memory means (24), for providing phase address signals ($S_{10}$), an output portion connected to each of said phase latch means (26, 28, 30), for providing phase latch command signals ($S_{41}$, $S_{42}$, $S_{43}$), and an output portion connected to each of said phase latch means (26, 28, 30), for providing an output timing signal ($S_5$).

5. The wave generation circuit of any of the preceding Claims, wherein said memory means (24) is a single ROM.

6. The wave generation circuit of any of the preceding Claims, wherein the operation means (22) provides a phase address signal ($S_{10}$) for each of said phases, the addresses indicated by any two of said address signals for the different phases differing from one another by an integral multiple of m/n, where m is the number of addresses of said memory means and n is the number of said phases.

7. A pulse width modulation inverter in combination with the wave generation circuit of any of the preceding Claims, the waves being modulated to form driving signals for switching elements in the pulse width modulation inverter.

**Patentansprüche**

1. Wellenerzeugungsschaltung zur Erzeugung einer Vielzahl von Wellen mit verschiedenen Phasen, umfassend eine Speichereinrichtung (24), in der Wellendaten gespeichert sind, und eine Einrichtung zum Auslesen der Wellendaten aus den jeweiligen Adressen in der Speichereinrichtung (24) für jede Phase, dadurch gekennzeichnet, daß die Wellendaten für nur eine Phase in der Speichereinrichtung (24) gespeichert sind, daß eine Betriebseinrichtung (22) vorgesehen ist, um in jedem Betriebszyklus der Schaltung Wellendaten aus den jeweiligen Adressen in der Speichereinrichtung (24) auszulesen, die sich hinsichtlich der Phasendifferenz zwischen den Ausgangswellen unterscheiden, und daß Phasenzwischenspeichereinrichtungen (26, 28, 30) für jede Phase vorgesehen sind und Phasenzwischenspeicher-Steuersignale von der Betriebseinrichtung (22) erhalten, um die aus den jeweiligen Adressen ausgelesenen Wellendaten zu speichern, wobei die Ausgangssignale der Phasenzwischenspeichereinrichtungen (26, 28, 30) die jeweiligen phasenversetzten Ausgangswellen bilden.

2. Wellenerzeugungsschaltung nach Anspruch 1, wobei die Betriebseinrichtung (22) ein Phasenadressensignal ($S_{10}$) für jede der Phasen in vorgegebenen Intervallen liefert, deren Länge gegeben ist durch (Anzahl der Adressen der Speichereinrichtung X eine vorgegebene Wellenfrequenz)$^{-1}$.

3. Wellenerzeugungsschaltung nach Anspruch 1 oder 2, wobei die Betriebseinrichtung (22) gleichzeitig ein Ausgangszeitsteuerungssignal ($S_5$) zu allen Phasenzwischenspeichereinrichtungen (26, 28, 30) überträgt, wenn sämtliche Phasenzwischenspeichereinrichtungen (26, 28, 30) die Zwischenspeicheroperation beendet haben, um dafür zu sorgen, daß die Phasenzwischenspeichereinrichtungen (26, 28, 30) die zwischengespeicherten Daten als Ausgangssignale liefern.

4. Wellenerzeugungsschaltung nach einem der vorherigen Ansprüche, wobei die Betriebseinrichtung (22) einen Ausgangsbereich, der an die Speichereinrichtung (24) angeschlossen ist, um Phasenadressensignale ($S_{10}$) zu liefern, einen Ausgangsbereich, der an jede der Phasenzwischenspeichereinrichtungen (26, 28, 30) angeschlossen ist, um Phasenzwischenspeicher-Steuersignale ($S_{41}$, $S_{42}$, $S_{43}$) zu liefern, und einen Ausgangsbereich aufweist, der an jede der Phasenzwischenspeichereinrichtungen (26, 28, 30) angeschlossen ist, um ein Ausgangszeitsteuerungssignal ($S_5$) zu liefern.

5. Wellenerzeugungsschaltung nach einem der vorherigen Ansprüche, wobei die Speichereinrichtung (24) ein einziger ROM ist.

6. Wellenerzeugungsschaltung nach einem der vorherigen Ansprüche, wobei die Betriebseinrichtung (22) ein Phasenadressensignal ($S_{10}$) für jede der Phasen liefert, wobei die Adressen, die von beliebigen zwei Adressensignalen für die verschiedenen Phasen angegeben werden, sich voneinander durch ein ganzzahliges Vielfaches von m/n unterscheiden, wobei m die Anzahl der Adressen der Speichereinrichtung und n die Anzahl der Phasen angeben.

7. Impulsbreitenmodulationsinverter in Kombination mit der Wellenerzeugungsschaltung nach einem der vorherigen Ansprüche, wobei die Wellen moduliert werden, um Treibersignale für Schaltelemente in dem Impulsbreitenmodulationsinverter zu bilden.

**Revendications**

1. Circuit générateur d'ondes pour générer une pluralité d'ondes de phases différentes, comprenant un moyen formant mémoire (24) dans lequel les données concernant les ondes sont stockées, et un moyen pour lire les données concernant les ondes à partir d'adresses respectives dans le moyen formant mémoire (24) pour chaque phase, caractérisé en ce que les données concernant les ondes pour une phase seulement sont stockées dans le moyen formant mémoire (24), des moyens d'opération (22) sont prévus pour lire, dans chaque cycle opératoire du circuit, des données concernant les ondes à partir des adresses respectives dans le moyen formant mémoire (24) qui diffèrent selon la différence de phase entre les ondes de sortie, et des moyens de verrouillage de phase (26, 28, 30) sont prévus pour chaque phase, et reçoivent des signaux de commande de verrouillage de phase provenant des moyens d'opération (22) pour stocker les données concernant les ondes lues à partir desdites adresses respectives, la sortie des moyens de verrouillage de phase (26, 28, 30) constituant les ondes de sortie déphasées respectives.

2. Circuit générateur d'ondes selon la revendication 1, dans lequel le moyen d'opération (22) fournit un signal d'adresse de phase $S_{10}$ pour chacune desdites phases à des intervalles prédéterminés dont la longueur est (le nombre d'adresses dudit moyen formant mémoire X une fréquence d'onde prédéterminé)$^{-1}$.

3. Circuit générateur d'ondes selon la revendication 1 ou 2, dans lequel le moyen d'opération (22) transmet simultanément un signal de synchronisation de sortie $S_5$ à tous lesdits moyens de verrouillage de phase (26, 28, 30) lorsque tous lesdits moyens de verrouillage de phase (26, 28, 30) ont terminé l'opération de verrouillage, pour amener lesdits moyens de verrouillage de phase (26, 28, 30) à fournir les données verrouillées en tant que sorties.

4. Circuit générateur d'ondes selon l'une des revendications précédentes, dans lequel ledit moyen d'opération (22) a une partie de sortie reliée audit moyen formant mémoire (24), pour fournir des signaux d'adresse de phase $S_{10}$, une partie de sortie reliée à chacun desdits moyens de verrouillage de phase (26, 28, 30) pour fournir des signaux de commande de verrouillage de phases $S_{41}$, $S_{42}$, $S_{43}$, et une partie de sortie reliée à chacun desdits moyens de verrouillage de phase (26, 28, 30) pour fournir un signal de synchronisation de sortie $S_5$.

5. Circuit générateur d'ondes selon l'une des revendications précédentes, dans lequel ledit moyen formant mémoire (24) est une mémoire ROM unique.

6. Circuit générateur d'ondes selon l'une des revendications précédentes, dans lequel le moyen d'opération (22) fournit un signal d'adresse de phase $S_{10}$ pour chacune desdites phases, les adresses indiquées par deux quelconques desdits signaux d'adresse pour les différentes phases différant l'une de l'autre par un multiple entier de m/n, où m est le nombre d'adresses dudit moyen formant mémoire et n est le nombre desdites phases.

7. Onduleur de modulation d'impulsions en largeur en combinaison avec le circuit générateur d'ondes selon l'une des revendications précédentes, les ondes étant modulées pour former des signaux d'attaque pour des éléments de commutation dans l'onduleur de modulation d'impulsions en largeur.

# FIG. 1
PRIOR ART

S1

10

FIRST
PHASE
ROM
12
S21

SECOND
PHASE
ROM
14
S22

THIRD
PHASE
ROM
16
S23

# FIG. 2

(a)

DATA VALUE Da

(b)

DATA VALUE Db

(c)

DATA VALUE Dc

0    $\frac{1}{3}$m    $\frac{2}{3}$m    m

ADDRESS ⟶

1

# FIG. 3

# FIG. 4

(a)

(b)

(c)

(d)

# FIG. 5

(a) ADDRESS SIGNAL S10

(b) STORED DATA OUTPUT S3

(c) LATCH COMMAND SIGNAL S41

(d) LATCH COMMAND SIGNAL S42

(e) LATCH COMMAND SIGNAL S43

(f) LATCHED DATA

(g) LATCHED DATA

(h) LATCHED DATA

(i) OUTPUT TIMING SIGNAL S5

(j) LATCHED DATA OUTPUT

(k) LATCHED DATA OUTPUT

(l) LATCHED DATA OUTPUT

$a$   $a+\frac{2}{3}m$   $a+\frac{1}{3}m$   $a+1$   $a+\frac{2}{3}m+1$   $a+\frac{m}{3}+1$

$O_{10}$   $O_{20}$   $O_{30}$   $O_{11}$   $O_{21}$   $O_{31}$

H / L

$O_{10}$   $O_{11}$

$O_{20}$   $O_{21}$

$O_{30}$   $O_{31}$

$(m \times f)^{-1}$

TIME

4